# EUROPEAN PATENT APPLICATION

(11) **EP 4 545 826 A1**
(43) Date of publication of application: **30.04.2025**
(21) Application number: 24837827.5
(22) Date of filing: 18.01.2024
(51) Int. Cl.: F16K 11/074, F16K 11/085

(54) **MULTI-CHANNEL VALVE AND THERMAL MANAGEMENT SYSTEM**

(71) Applicant: Johnson Electric International AG, 3280 Murten (CH)
(72) Inventor: CHEN, Anbang, Shenzhen, Guangdong 518125 (CN); QU, Tao, Shenzhen, Guangdong 518125 (CN); SUN, Ning, Shenzhen, Guangdong 518125 (CN); LIU, Xiaoyu, Shenzhen, Guangdong 518125 (CN)
(74) Representative: Doherty, William
(86) International application number: PCT/CN2024/073085
(87) International publication number: WO 2025/055238

(57) **Abstract**

The application discloses a multi-way valve including a valve housing and a valve core rotatably mounted in the valve housing. The valve housing defines a plurality of valve ports, the valve core defines a plurality of flow channels, each of which has two ends adapted to be respectively aligned with and in fluid communication with two of the valve ports of the valve housing. A plurality of buffer chambers is formed between the valve housing and the valve core. The buffer chambers are in fluid isolation from each other. The valve core is provided with a plurality of balance holes, each of which is in fluid communication with one of the flow channels. The buffer chambers communicate with the corresponding flow channels through the corresponding balance holes.

## Description

### FIELD OF THE INVENTION

This application relates to the field of heat exchange technology, in particular to a thermal management system and a valve thereof.

### BACKGROUND

For electric vehicles, there are diverse thermal management demands for different parts, such as cooling the traction motor, cooling or heating the battery under different operating conditions, and cooling or heating the passenger cabinet during different seasons. Therefore, the thermal management system of electric vehicles includes multiple fluid circuits for heat exchange medium, such as motor fluid circuit, battery fluid circuit, passenger cabinet fluid circuit, etc., and under different working conditions, the heat exchange medium has different flow controlling requirement in each fluid circuit.

Multi-way valves are widely used to control fluid flow. For example, in a thermal management system of new energy vehicles, multi-way valves are always necessary to management flows of coolant in different circuits. However, existing multi-ways valves have problems with internal leakage, especially at higher hydraulic pressures. Therefore, there is an urgent need for a multi-way valve that can reduce or eliminate internal leakage.

### SUMMARY OF THE INVENTION

The present disclosure aims to provide a multi-way valve and a thermal management system. The multi-way valve can reduce or eliminate internal leakage.

In one aspect, the present disclosure provides a multi-way valve including a valve housing and a valve core rotatably mounted in the valve housing. The valve housing defines a plurality of valve ports. The valve core defines a plurality of flow channels, each of which has two ends adapted to be respectively aligned with and in a fluid communication with two of the valve ports of the valve housing. A plurality of buffer chambers is formed between the valve housing and the valve core. The buffer chambers are in fluid isolation from each other. The valve core is provided with a plurality of balance holes, each of which is in fluid communication with one of the flow channels. The buffer chambers communicate with the corresponding flow channels through the corresponding balance holes.

Preferably, wherein the valve ports are defined in a side of the valve housing thereof perpendicular to a rotation axis of the valve housing to enable a fluid to flow into one of the flow channel via one of the valve ports and flow out of the flow channel via another one of the valve ports.

Preferably, the valve core includes a first axial end and a second axial end that are opposite to each other, the balance holes are defined in the first axial end of the valve core, each of the flow channels has two core ports provided at the second axial end of the valve core, the core ports are configured to be aligned and in fluid communication with the corresponding valve ports.

Preferably, the buffer chambers are defined between axial ends of the valve core and the valve housing facing each other, the buffer chambers are distributed radially spaced relative to each other so that the corresponding balance holes directly communicating with the corresponding buffer chambers are offset radially to each other.

Preferably, each of the buffer chambers is ring-shaped.

Preferably, the multi-channel valve further includes a preload member disposed between the valve housing and the valve core, and at least one of the buffer chambers is defined between the preload member and the valve core.

Preferably, each of the buffer chambers is ring-shaped.

Preferably, the valve core comprises a valve core body and a cover plate fixed to an axial top end of the valve core body, the cover plate comprises a plate portion, and a first ring portion and a second ring portion depending on a side of the plate portion, the plurality of buffer chambers comprises a first buffer chamber formed radially outside the first ring portion, a second buffer chamber formed between the first ring portion and the second ring portion, and a third buffer chamber formed radially inside the second ring portion; the first buffer chamber, the second buffer chamber, and the third buffer chamber are in fluid isolation from each other.

Preferably, a rotating shaft extends from a centre of the cover plate; the preload member forms a first convex portion surrounding the rotating shaft, and a second convex portion located at radially inner side of first convex portion and surrounding the rotating shaft; the first convex portion is engaged between the first ring portion and the second ring portion of the cover plate and cooperatively bounding the second buffer chamber; the second convex portion is engaged between the second ring portion and the rotating shaft and cooperatively bounding the third buffer chamber.

Preferably, total number of flow channels of the valve core is greater than number of flow channels directly communicating with balance holes

Preferably, the flow channels comprise one or more flow channels directly communicating with the balance holes and the flow channels not directly communicating with the balance holes, one of the flow channels directly communicating with the balance holes can be connected in series with one of the flow channels not directly communicating with the balance holes.

Preferably, wherein said one of the fluid pressures in the flow channel directly communicating with the balance holes is greater than the fluid pressure in said one of the flow channels not directly communicating with any of the balance holes.

In another aspect, the present disclosure further provides a thermal management system including the multi-channel valve above and multiple heat exchange branches, and two ends of each heat exchange branches are correspondingly connected to two of the valve ports to cooperatively form a closed fluid circuit.

Preferably, wherein total number of total flow channels of the valve core is greater than number of flow channels directly communicating with balance holes.

Preferably, wherein some of the multiple flow channels directly communicates balance holes, while other the multiple flow channels not directly communicates with any balance holes; the multiple heat exchange branches comprise a first heat exchange branch and a second heat exchange branch, the first heat exchange branch, one of the flow channels directly communicating balance holes, one of the flow channels not directly communicating with any balance holes, and the second heat exchange branch are sequentially connected in series to form a fluid circuit, a fluid pressure in the flow channel directly communicating with the balance holes is greater than that in the flow channel not directly communicating with any balance holes.

Preferably, wherein the first heat exchange branch is provided with a pump to drive a fluid to flow from the first branch to the flow channel communicating with the balance holes, and then sequentially flows through the second heat exchange branch and the flow channel not communicating with any balance hole.

Preferably, wherein each of the fluid circuits is in fluid communication with one of the buffer chamber via the corresponding via the corresponding balance holes

### BRIEF DESCRIPTION OF THE DRAWINGS

Figure 1 is a perspective view of a multi-way valve according to an embodiment of the present invention.
Figure 2A is a cross-sectional view of the multi-way valve shown in Figure 1.
Figure 2B is an enlarged view of portion A of the multi-way valve shown in Figure 2A.
Figure 3 is an exploded view of the multi-way valve shown in Fig. 1.
Figure 4 is an exploded view of a lower housing member, a first sealing ring, and a sealing gasket of the multi-way valve shown in Fig. 3.
Figure 5 is an exploded view of the preload member, some sealing rings and a corrugated washer of the multi-way valve shown in Fig. 2A.
Figure 6 is a top plan view of the valve core shown in Fig. 3, where a core body of the valve core is shown by a dotted line.
Figure 7 is a schematic diagram of a thermal management system of an embodiment of the present disclosure.

### DETAILED DESCRIPTION OF THE PREFERRED EMBODIMENTS

The present invention will be further described below based on the drawings and the embodiments.

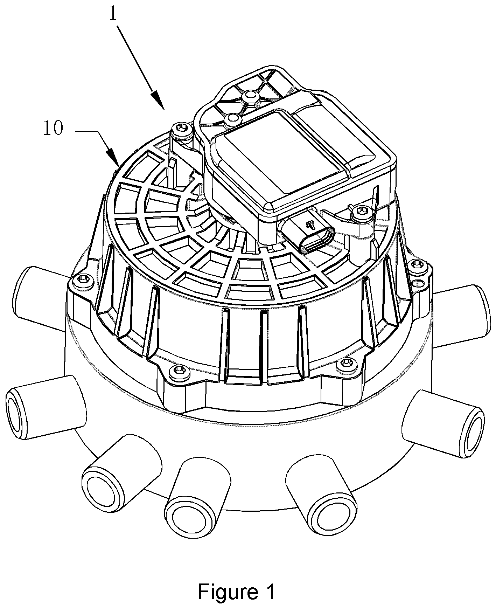

Referring to Figures 1, 2A, and 3, a multi-way valve 1 according to an embodiment of the present invention comprises a valve housing 10 and a valve core 20 rotatably mounted in the valve housing 10. The valve housing 10 defines multiple valve ports 31. The valve core 20 defines multiple flow channels 32. The two ends of each of the channels 32 are adapted to be respectively aligned with and in fluid communication with two of the valve ports 31 of the valve housing 10. Multiple buffer chambers 40 are formed between the inner surface of the valve housing 10 and the outer surface of the valve core 20, and the multiple buffer chambers 40 are in fluid isolation from each other. The valve core 20 defines multiple balance holes 50, each of which is in fluid communication with one of the flow channels 32. Each of the buffer chambers 40 is in fluid communication with one of flow channels 32 through one or more of the corresponding balance holes 50.

Therefore, when the valve core 20 has work under a high fluid pressure (such as hydraulic pressure from the coolant), some of the fluid inside the valve core 20 can be discharged to the corresponding buffer chamber 40 through the balance holes 50, and the fluid pressure in the buffer chamber 40 and the fluid pressure inside the valve core 20 can be balanced through the balance hole 50, thereby reducing the compression and impact of high-pressure fluid on the valve core 20, and reducing or even avoiding internal leakage caused by it.

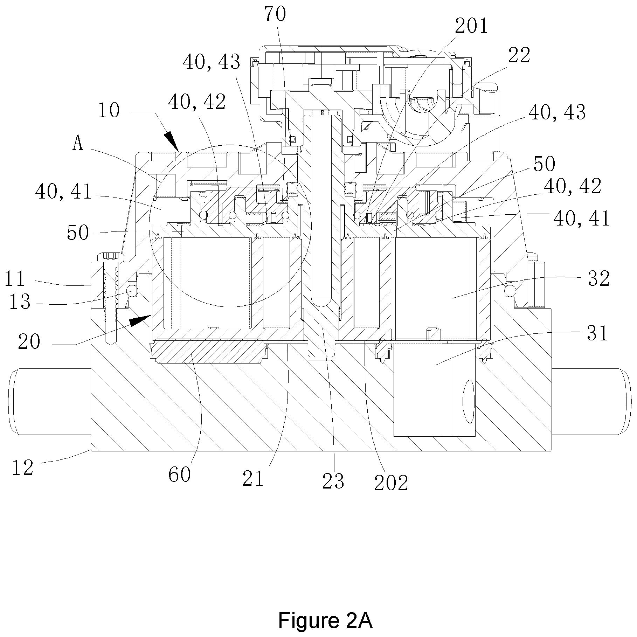

Referring to Figures 2A to 3, in one embodiment, the valve ports 31 are defined in a side of the valve housing thereof perpendicular to a rotation axis of the valve housing 10. A fluid can flow into the flow channel via one of the valve ports 31 and flows out of the flow channel 32 via the other valve port 31. Preferably, the balance hole 50 also extends axially to more effectively reduce the axial pressure caused by high-pressure fluid on the valve core 20, resulting in a better effect of reducing or avoiding internal leakage.

Specifically, referring to Figures 2A to 4, the valve housing 10 includes an upper housing member 11 and a lower housing member 12 with a split design, which are fixedly connected (e.g. by screws). Preferably, the upper housing member 11 and the lower housing member 12 are sealing connected with each other by a first sealing ring 13. In this embodiment, the valve port 31 is defined in the lower housing member 12.

More specifically, the lower housing member 12 is substantially cylindrical, and includes a bottom wall 120, a peripheral wall 121, and a transverse partition 122 axially spaced apart from the bottom wall 120 and surrounded by the peripheral wall 121. The bottom wall 120 and the peripheral wall 121 jointly enclose a cavity, and the transverse partition 122 is roughly located in the axial middle position of the cavity, dividing the cavity into an upper portion and a lower portion. The valve port 31 is located on the transverse partition 122. As an example, in this embodiment, the transverse partition 122 is provided with a first valve port 311, a second valve port 312, a third valve port 313, a fourth valve port 314, a fifth valve port 315, a sixth valve port 316, a seventh valve port 317, an eighth valve port 318, and a ninth valve port 319 distributed in sequence along the circumferential direction. The valve ports 311-319 are isolated from each other. It should also be understood that in other embodiments, the valve housing 10 may also include other numbers (e.g., eight) and/or arrangements of valve ports 31.

In one embodiment, the lower housing member 12 is further provided with multiple vertical partitions 123 radially distributed between the transverse partition 122 and the bottom wall 120 (i.e., in the lower portion of the cavity), thereby forming multiple housing chambers 124 between the transverse partition 122 and the bottom wall 120. The housing chambers 124 are connected one-to-one with the valve ports 31. In addition, multiple tubular interfaces 125 extend from the outer side of the peripheral wall 121 of the lower housing member 12 and are in one-to-one correspondence with the housing chambers 124.

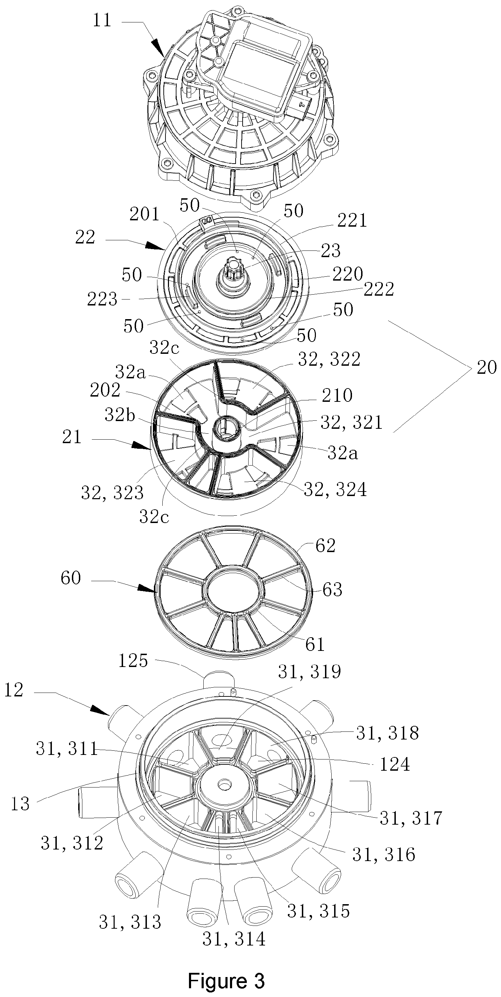

In one embodiment, referring to both Figures 2A and 3, the valve core 20 is partially accommodated in the upper portion of the lower housing member 12, and partially accommodated in the upper housing member 11. Specifically, the valve core 20 includes a core body 21 and a cover plate 22 independently formed with each other. The cover plate 22 is fixedly attached to an axial top end of the valve core body 21 by clamping, bonding, or welding. A rotating shaft 23 extends from a centre of the cover plate 22. A top end of the rotating shaft 23 is rotatably connected to the upper housing member 11. A lower portion of the rotating shaft 23 extends into a connecting shaft 210 depending upon a centre of the valve core body 21, thereby rotatably connected to the lower housing member 12. It can be understood that in other embodiments, the valve core 20 can also be integrally formed. In one embodiment, the balance holes 50 are defined in the cover plate 22 (i.e., the first axial end 201 of the valve core 20). The flow channels 32 are defined in the valve core body 21.

Specifically, referring to Figure 3, each of the flow channels 32 includes two core ports 32a that are spaced apart from each other and a channel body 32 that connects the two core ports 32a. The core ports 32a are defined in a bottom end of the valve core body 21 (i.e., a second axial end 202 of the valve core 20). The core ports 32a are configured to be aligned and in fluid communication with the corresponding valve ports 31. The channel body 32b are bounded by valve core partitions 32c inside the valve core body 21. As a result, the fluid can flow into the corresponding flow channel 32 via one of the valve ports 31 (through the corresponding tubular interface 125 and valve housing chamber 124) and one of the core ports 32a, and then flow out of the flow channel 32 via the other one core port 32a and the corresponding other one valve port 31 (discharged through the corresponding tubular interface 125 and valve housing chamber 124).

In one embodiment, the valve core 20 includes multiple flow channels 32 that are not interconnected with each other, namely a first flow channel 321, a second flow channel 322, a third flow channel 323, and a fourth flow channel 324. The first flow channel 321 spans the valve core 20 radially, the second flow channel 322 is located on one radial side of the first flow channel 321, the third flow channel 323 and the fourth flow channel 324 are located on the other radial side of the first flow channel 321. The second flow channel 322, the third flow channel 323, and the fourth flow channel 324 are distributed at intervals in the circumferential direction of the valve core 20. It should also be understood that in other embodiments, the valve core 20 may also include other numbers (such as three) and/or arrangements of flow channels 32.

The first flow channel 321 connects the first valve port 311 and the seventh valve port 317. The second flow channel 322 connects the eighth valve port 318 and the ninth valve port 319. The third flow channel 323 connects the second valve port 312 and the third valve port 313. The fourth flow channel 324 connects the fourth valve port 314 and the sixth valve port 316. The fifth valve port 315 is blocked and not connected to any flow channel 32. It should be understood that the valve core 20 can also rotate relative to the valve housing 10. Therefore, in different states, the valve ports that communicates with the flow channels 32 will change.

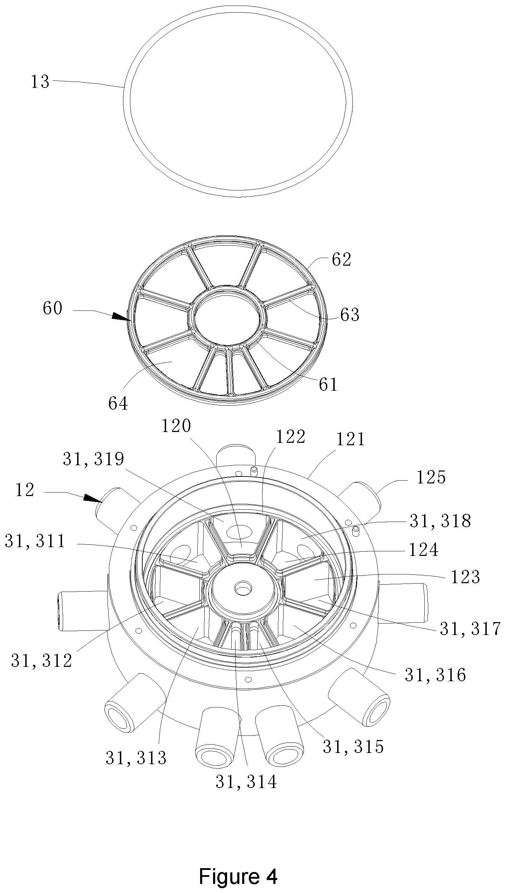

Preferably, in order to improve the dynamic sealing effect between the valve core 20 and the valve housing 10, a sealing gasket 60 is provided between the valve core 20 and the valve housing 10. As shown in Figures 2A and 4, the sealing gasket 60 is arranged between the transverse partition 122 and the bottom end of the valve core body 21. The sealing gasket 60 includes an inner ring 61, an outer ring 62, and multiple ribs 63 connecting the inner ring 61 and the outer ring 62. The multiple ribs 63 are configured to be respectively disposed on the multiple vertical partitions 123. An opening 64 is formed between adjacent ribs 63 to be in alignment with a corresponding valve port 31.

Additionally, or alternatively, the multi-way valve further comprises a preload member 70 (shown in Figure 2A), which is disposed between the upper housing member 11 and the cover plate 22 to provide pressure for the dynamic seal between the valve core 20 and the valve housing 10, resulting in a better dynamic sealing effect.

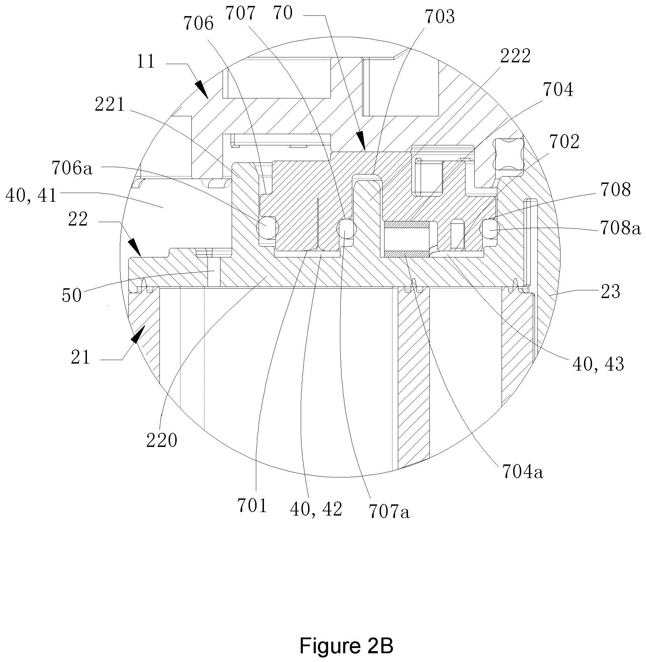

Specifically, as shown in Figures 2B and 3, the cover plate 22 includes a disc-shaped plate portion 220, and a first ring portion 221 and a second ring portion 222 depending on an upper side of the plate portion 220 (i.e. one of the axial outer ends of the valve core 20). The first ring portion 221 is spaced apart from an outer periphery of the plate portion 220 by a certain distance. The second ring portion 222 is located on the inner side of the first ring portion 221 and is spaced apart from the first ring portion 221 by a certain distance. Furthermore, in one embodiment, the cover plate 22 further includes a plurality of interlocking features 223 arranged at intervals along the circumferential direction between the first ring portion 221 and the second ring portion 222.

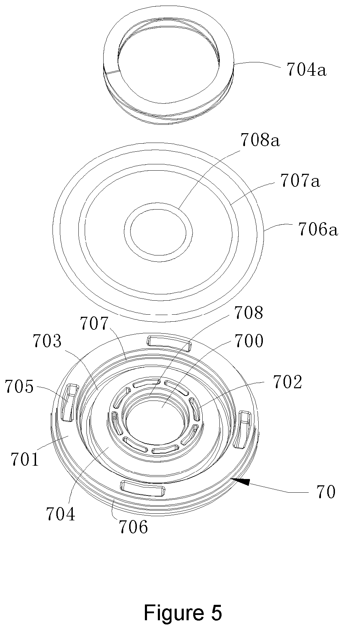

As shown in Figures 2B and 5, the preloading member 70 is generally disc-shaped, with a through hole 700 through which the rotation shaft 23 extends. In one embodiment, the upper side of the preload member 70 is sealingly attached to the lower end of the upper valve housing 11 (also one of the axial inner end of the valve housing 11). A lower end of the preload member 70 includes a first convex portion 701 located radially outward away from the rotating shaft 23, a second convex portion 702 located at radially inner side of first convex portion 701, and a first concave portion 703 and a second concave portion 704 located between the first convex portion 701 and the second convex portion 702.

The first convex portion 701 is provided with an engagement grooves 705. The first convex portion 701 is engaged between the first ring portion 221 and the second ring portion 222 of the cover plate 22 with the engagement portions 223 on the cover plate 22 engaged with the corresponding engagement grooves 705, thereby achieving synchronous transmission connection between the preload 70 and the cover plate 22. The second ring portion 222 is engaged into the first concave portion 703. The second concave portion 704 and the second convex portion 702 are located between an inner side of the second ring portion 222 and the rotating shaft 23. Preferably, an elastic corrugated washer 704a is configured to be fitted in the second recessed portion 704, which resists against both of the preload member 70 and the cover plate 22 to improve the dynamic sealing effect between the cover plate 22 and the upper valve housing 11.

Furthermore, a first shoulder 706 and a second shoulder 707 are respectively formed at outer and inner sides of the first convex portion 701. a first shoulder 706 and a second shoulder 707. A second sealing ring 706a is mounted onto the first shoulder 706, and a third sealing ring 707a is mounted onto the second shoulder 707. A third shoulder 708 is formed at an inner side of the second convex portion 702. A fourth sealing ring 708a is mounted onto the third shoulder 708.

Referring to Figure 2B, the second sealing ring 706a is sandwiched between the first ring portion 221 and the first convex portion 701, thereby sealingly separating one of the buffer chambers 40 (hereinafter referred to as a first buffer chamber 41) corresponding to an area of the plate portion 220 outside the first ring portion 221 from other buffer chambers 40. In one embodiment, the first buffer chamber 41 is ring-shaped and bounded by the axial lower end of the upper valve housing 11, the axial upper end of the plate portion 220, an inner side of the peripheral wall of the valve housing 10, and an outer side of the peripheral wall of the valve core 20 (as shown in Figure 2A).

Referring to Figure 2B again, the third sealing ring 707a is sandwiched between the second ring portion 222 and the first convex portion 701, thereby sealingly separating one of the buffer chambers 40 (hereinafter referred to as a second buffer chamber 42) corresponding to an area between the first ring portion 221 and the second ring portion 222 of the plate portion 220 from other buffer chambers 40. In one embodiment, the second buffer chamber 42 is also ring-shaped and and bounded by the axial lower end of the upper valve housing 11 and the axial upper end of the plate portion 220. However, the second buffer chamber 42 is located at radially inner side of the first buffer chamber 41.

Referring to Figure 2B again, the fourth sealing ring 708a is sandwiched between the second convex portion 702 and the rotating shaft 23, thereby sealingly separating one of the buffer chambers 40 (hereinafter referred to as a second buffer chamber 43) corresponding to an area of the plate portion 220 located within the second ring portion 222 from other buffer chambers 40.
the third sealing ring 707a and the fourth sealing ring 708a seal off the buffer chamber 40 (hereinafter referred to as the third buffer chamber 43) corresponding to the area of the plate portion 220 located within the second ring portion 222 from other buffer chambers 40. In one embodiment, the third buffer chamber 43 is also ring-shaped and bounded by the axial lower end surface of the upper valve housing 11 and the axial upper end surface of the plate portion 220. However, the third buffer chamber 43 is located radially inner side of the second buffer chamber 42.

It can be understood that the configuration of the buffer chambers 41-43 mentioned above are only shown as examples. In other embodiments, the buffer chambers 40 can be configurated between the axial lower end of the upper valve housing 11 and the axial upper end of the plate portion 220 in a different way. The number of buffer chambers 40 is not limited to three, but can be two, four, or more buffer chambers 40. Correspondingly, the relative positional relationship of each buffer chamber 40 is not limited to the positional relationship shown in the diagram.

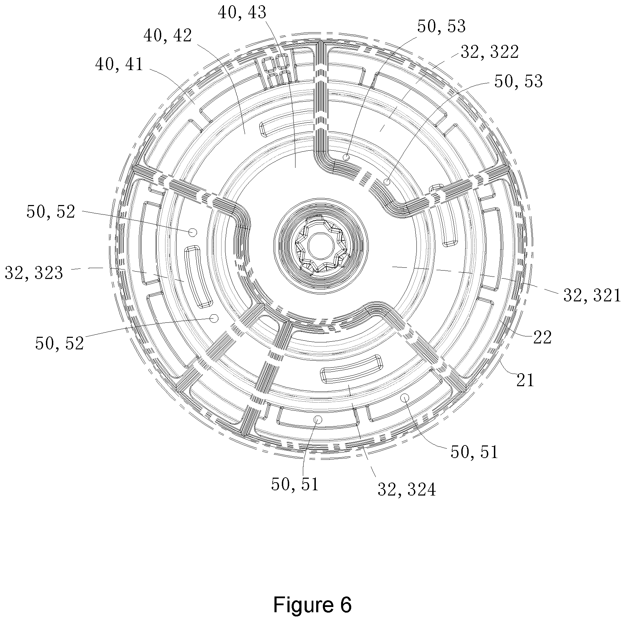

Referring to Figures 2B and 6, in one embodiment, two balance holes (hereinafter referred to as the first balance holes 51) are defined in the plate portion 220 outside the first ring portion 221 to be in commutation with the first buffer chamber 41. Specifically, in this embodiment, the first balance hole 51 communicates with the fourth flow channel 324 of the valve core body 21.

Other two balance holes 50 (hereinafter referred to as second balance holes 52) are defined in the plate portion 220 between the first ring portion 221 and the second ring portion 222 to be in commutation with the second buffer chamber 42. The second balance hole 52 is offset radially inward relative to the first balance hole 51. Specifically, the second balance hole 52 communicates with the third flow channel 323 of the valve core body 21.

Other two balance holes 50 (hereinafter referred to as third balance holes 52) are defined in the plate portion 220 inside the second ring portion 222 to be in commutation with the third buffer chamber 43. The third balance hole 53 is offset radially inward relative to the second balance hole 52. Specifically, the third balance hole 53 communicates with the second flow channel 322 of the valve core body 21.

Referring to Figure 6, in one embodiment, the first flow channel 321 of the valve core body 21 is configured to avoid communicating with any of the balance holes 50. Therefore, the total number of flow channels 32 of the valve core body 21 is greater than the number of flow channels 32 directly communicating with balance holes 50. In one embodiment, the total number of flow channels 32 of the valve core body 21 is four, while only three flow channels 32 directly communicates with the balance holes 50.

In other words, the total number of flow channels 32 of the valve core body 21 is greater than the number of buffer chambers 40. For example, in one embodiment, there are total four flow channels 32 and three buffer chambers 40 which respectively communicates with three of the total four flow channels 32 via the corresponding balance holes 50.

It can be understood that in other embodiments, there will be another one or more of the flow channel 321 configured to avoid communicating with any of the balance holes 50. Alternatively. each of the buffer chambers 40 are configured to directly communicate with one corresponding flow channel 32 via only one or more than two balance holes 50, but not limited to just two balance holes. 50 as in the aforementioned embodiment.

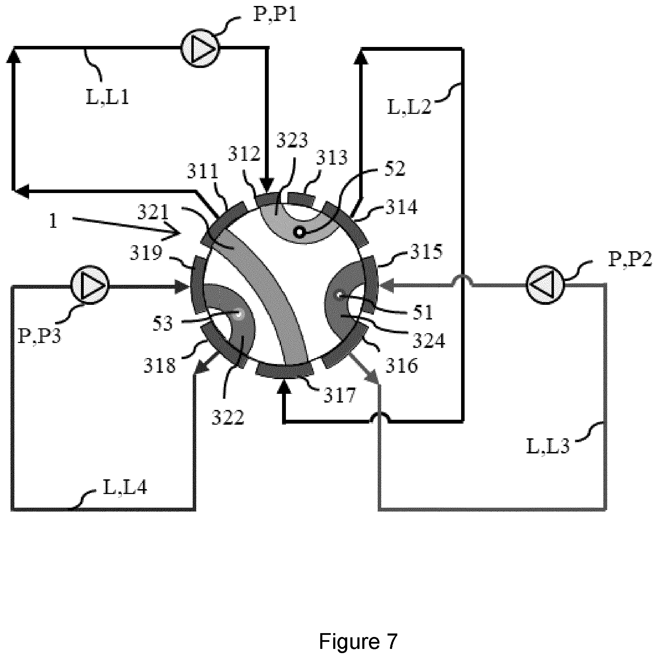

Referring to Figure 7, an embodiment of a thermal management system includes the aforementioned multi-way valve 1 (briefly shown in Figure 7), multiple heat exchange branches L, and several pumps P set on the branches L. Two ends of each heat exchange branch L are respectively connected to two corresponding tubular interfaces 125 of the multi-way valve 1, so as to communicates with the corresponding flow channel 32 of the multi-way valve 1 through the corresponding valve housing chamber 124 and valve port 31, thereby forming a closed fluid circuit.

In one embodiment, the thermal management system includes four heat exchange branches L (namely a first heat exchange branch L1, a second heat exchange branch L2, a third heat exchange branch L3, and a fourth heat exchange branch L4) and three pumps P (namely a first pump P1, a second pump P2, a third pump P3). The first pump P1 is set on the first heat exchange branch L1. The second pump P2 is set on the third heat exchange branch L3. The third pump P3 is set on the fourth heat exchange branch L4. and no pump P is set on the second heat exchange branch L2.

In this embodiment, two ends of the first heat exchange branch L1 are respectively connected to the first valve port 311 and the second valve port 312 through the corresponding tubular interfaces 125. Two ends of the second heat exchange branch L2 are respectively connected to the fourth valve port 314 and the seventh valve port 317 through the corresponding tubular interfaces 125. Two ends of the third heat exchange branch L3 are respectively connected to the fifth valve port 315 and the sixth valve port 316 through corresponding tubular interfaces 125. Two ends of the fourth heat exchange branch L4 are respectively connected to the eighth valve port 318 and the ninth valve port 319 through corresponding tubular interfaces 125.

In Figure 7, the first flow channel 321 interconnects the first valve port 311 and the seventh valve port 317. The second flow channel 322 interconnects the eighth valve port 318 and the ninth valve port 319. The third flow channel 323 interconnects the second valve port 312 and the fourth valve port 314. The fourth flow channel 324 interconnects the fifth valve port 315 and the sixth valve port 316. The third valve port 313 fails to be connected to any of the flow channels 321-324.

Referring to Figure 7, the first heat exchange branch L1, the third flow channel 323, the second heat exchange branch L2, and the first flow channel 321 are sequentially connected in series to form a fluid circuit. The second flow channel 322 is connected to the fourth heat exchange branch L4 to form another fluid circuit. The fourth channel 324 is connected to the third heat exchange branch L3 to form another fluid circuit.

Referring to figures 6 and 7, the fourth flow channel 324 communicates with the first balance holes 51, the third heat exchange branch L3 is equipped with the second pump P2. Therefore, the fourth flow channel 324 and the third heat exchange branch L3 form a closed fluid circuit, and the fluid flowing through the fourth flow channel 324 can be introduced into the corresponding first buffer chamber 41 through the first balance holes 51. The first buffer chamber 41 can help to balance the fluid pressure in the fourth flow channel 324. The second flow channel 322 communicates with the third balance holes 53, and the fourth heat exchange branch L4 is equipped with the third pump P3. Therefore, the second flow channel 322 and the fourth heat exchange branch L4 form a closed fluid circuit. The fluid flowing through the second flow channel 322 can be introduced into the third buffer chamber 41 through the third balance holes 53. The third buffer chamber 43 can help to balance the fluid pressure in the second flow channel 322. The third flow channel 323 communicates with the second balance holes 52, but the first flow channel 321 fails to directly communicates with any of the balance holes 50. The second heat exchange branch L2 is not equipped with a pump P, but the first heat exchange branch L1 is equipped with a first pump P1. The first channel 321 and the third channel 323 are connected in series through the first heat exchange branch L1 and the second heat exchange branch L2 to form a closed fluid circuit. Since the third channel 323 communicates with the second buffer chamber 42 through the second balance holes 52, the second buffer chamber 42 can simultaneously balance the fluid pressure in the first channel 321 and the third channel 323.

Based on aforementioned description, although not all channels 321-324 in the embodiment can directly communicates with the corresponding buffer chambers 40 via the balance holes 50, each of closed fluid circuits formed with one or more channels is in fluid communication with one of the buffer chambers 40 via the corresponding balance holes 50. Therefore, in the thermal management system of this embodiment, fluid leakage between the fluid circuits inside the multi-way valve 1 can be effectively reduced or avoided, even under high hydraulic conditions.

Preferably, the fluid pressure in the third flow channel 323 is greater than the fluid pressure in the first flow channel 321. That is, in order to more effectively reduce or avoid internal leakage of the multi-way valve 1, the fluid pressure in the third flow channel 323 with the corresponding second balance holes 52 is greater than the fluid pressure in the first flow channel 321 without any the corresponding balance hole 50. Specifically, in this embodiment, the first pump P1 is installed on the first heat exchange branch L1, so that the fluid is pumped out of the first heat exchange branch L1 by the first pump P1 and first flows into the third channel 323, and then sequentially flows through the second heat exchange branch L2 and the first channel 321. It can be understood that in the fluid circuit, the third flow channel 323 is closer to the downstream of the first pump P1 than the first channel 321, so the fluid pressure in the third flow channel 323 is relatively higher. Correspondingly, in other embodiments, the thermal management system may also include other numbers of heat exchange branches L and pumps P. The connection between each heat exchange branch L and the multi-way valve 1 may also be different. The arrangement of pumps P may be adjusted according to actual needs.

Although certain inventive embodiments of the present disclosure have been specifically described, the present disclosure is not to be construed as being limited thereto. Various changes or modifications may be made to the present disclosure without departing from the scope and spirit of the present disclosure.

## Claims

1. A multi-way valve comprising a valve housing and a valve core rotatably mounted in the valve housing, the valve housing defining a plurality of valve ports, the valve core defining a plurality of flow channels; two ends of each flow channel being adapted to be respectively aligned with and in fluid communication with two of the valve ports of the valve housing; wherein
a plurality of buffer chambers is formed between an inner surface of the valve housing and an outer surface of the valve core; the buffer chambers are in fluid isolation from each other; the valve core is provided with a plurality of balance holes; each balance hole is in fluid communication with one of the flow channels; the buffer chambers communicate with the corresponding flow channels through the corresponding balance holes.

2. The multi-way valve of claim 1, wherein the valve ports are defined in a side of the valve housing thereof perpendicular to a rotation axis of the valve housing to enable a fluid to flow into one of the flow channel via one of the valve ports and flow out of the flow channel via another one of the valve ports.

3. The multi-way valve of claim 2, wherein the valve core comprises a first axial end and a second axial end that are opposite to each other, the balance holes are defined in the first axial end of the valve core, each of the flow channels has two core ports provided at the second axial end of the valve core, the core ports are configured to be aligned and in fluid communication with the corresponding valve ports.

4. The multi-channel valve of claim 1, wherein the buffer chambers are defined between axial ends of the valve core and the valve housing facing each other, the buffer chambers are distributed radially spaced relative to each other so that the corresponding balance holes directly communicating with the corresponding buffer chambers are offset radially to each other.

5. The multi-channel valve of claim 1, wherein each of the buffer chambers is ring-shaped.

6. The multi-channel valve of claim 1 or 5, further comprising a preload member disposed between the valve housing and the valve core, and at least one of the buffer chambers is defined between the preload member and the valve core.

7. The multi-channel valve of claim 6, wherein the valve core comprises a valve core body and a cover plate fixed to an axial top end of the valve core body, the cover plate comprises a plate portion, and a first ring portion and a second ring portion depending on a side of the plate portion, the plurality of buffer chambers comprises a first buffer chamber formed radially outside the first ring portion, a second buffer chamber formed between the first ring portion and the second ring portion, and a third buffer chamber formed radially inside the second ring portion; the first buffer chamber, the second buffer chamber, and the third buffer chamber are in fluid isolation from each other.

8. The multi-channel valve of claim 7, wherein a rotating shaft extends from a centre of the cover plate; the preload member forms a first convex portion surrounding the rotating shaft, and a second convex portion located at radially inner side of first convex portion and surrounding the rotating shaft; the first convex portion is engaged between the first ring portion and the second ring portion of the cover plate and cooperatively bounding the second buffer chamber; the second convex portion is engaged between the second ring portion and the rotating shaft and cooperatively bounding the third buffer chamber.

9. The multi-channel valve of claim 1, wherein total number of flow channels of the valve core is greater than number of flow channels directly communicating with balance holes.

10. The multi-channel valve of claim 1, wherein the flow channels comprise one or more flow channels directly communicating with the balance holes and the flow channels not directly communicating with the balance holes, one of the flow channels directly communicating with the balance holes can be connected in series with one of the flow channels not directly communicating with the balance holes.

11. The multi-channel valve according to claim 10, wherein said one of the fluid pressures in the flow channel directly communicating with the balance holes is greater than the fluid pressure in said one of the flow channels not directly communicating with any of the balance holes.

12. A thermal management system, comprising the multi-channel valve of any of claims 1-8 and multiple heat exchange branches, and two ends of each heat exchange branches are correspondingly connected to two of the valve ports to cooperatively form a closed fluid circuit.

13. The thermal management system of claim 12, wherein number of total flow channels of the valve core is greater than number of flow channels directly communicating with balance holes.

14. The thermal management system of claim 13, wherein some of the multiple flow channels directly communicates balance holes, while other the multiple flow channels not directly communicates with any balance holes; the multiple heat exchange branches comprise a first heat exchange branch and a second heat exchange branch, the first heat exchange branch, one of the flow channels directly communicating balance holes, one of the flow channels not directly communicating with any balance holes, and the second heat exchange branch are sequentially connected in series to form a fluid circuit, a fluid pressure in the flow channel directly communicating with the balance holes is greater than that in the flow channel not directly communicating with any balance holes.

15. The thermal management system of claim 14, wherein the first heat exchange branch is provided with a pump to drive a fluid to flow from the first branch to the flow channel communicating with the balance holes, and then sequentially flows through the second heat exchange branch and the flow channel not communicating with any balance hole.

16. The thermal management system of claim 14, wherein each of the fluid circuits is in fluid communication with one of the buffer chamber via the corresponding via the corresponding balance holes.
